# EUROPEAN PATENT SPECIFICATION

(11) **EP 4 338 379 B1**
(45) Date of publication and mention of the grant of the patent: **29.07.2026**
(21) Application number: 22890308.4
(22) Date of filing: 31.10.2022
(51) Int. Cl.: H04L 12/28, H04L 67/50, G06N 3/044, G06N 3/0455, G06N 3/0464, G06N 3/088, G06N 3/0895, G06N 3/092, H04L 67/12, H04L 67/00, H04W 4/70

(54) **METHODS AND SYSTEMS FOR CONTROLLING INTERNET OF THINGS DEVICES BY PREDICTING NEXT USER ACTION**
VERFAHREN UND SYSTEME ZUR STEUERUNG VON INTERNET-DER-DINGE-VORRICHTUNGEN DURCH VORHERSAGE DER NÄCHSTEN AKTION DES BENUTZERS
PROCÉDÉS ET SYSTÈMES DE COMMANDE DE DISPOSITIFS DE L'INTERNET DES OBJETS PAR PRÉDICTION D'UNE ACTION D'UTILISATEUR SUIVANTE

(30) Priority: 06.11.2021 IN 202141050895
(43) Date of publication of application: 20.03.2024
(73) Proprietor: Samsung Electronics Co., Ltd., Suwon-si, Gyeonggi-do 16677 (KR)
(72) Inventor: MAHADEVA, Sathwick, Bengaluru, Karnataka 560037 (IN); PATAGE, Vinay Vasanth, Bengaluru, Karnataka 560037 (IN); JAIN, Aditya, Bengaluru, Karnataka 560037 (IN)
(74) Representative: Appleyard Lees IP LLP
(86) International application number: PCT/KR2022/016820
(87) International publication number: WO 2023/080577

(56) References cited:
- EP-A1- 3 419 223
- JP-A- 2019 095 517
- KR-A- 20080 052 158
- US-A1- 2018 323 996
- US-A1- 2019 368 103
- US-A1- 2021 015 292
- US-A1- 2021 249 010

## Description

### Technical Field

The disclosure relates to a method, an apparatus and a system for controlling Internet of Things (IoT) devices, and more particularly relates to a method, an apparatus and a system for controlling loT devices by predicting next user action based on non-speech sound.

### Background Art

In the modern era of technological advancement, interactive systems, for example, virtual assistant (VA) devices have evolved to assist users to perform various activities. The virtual assistants are generally included in the electronic devices as a device functionality with the capability of performing functions based on voice commands. For instance, a number of electronic devices, such as refrigerator, televisions, lighting systems, and hobs have been rendered smart and are configured to operate based on voice commands. These electronic devices operate in an Internet of Things (loT) environment and may be referred as loT devices, devices, or smart devices throughout the disclosure without deviating from the scope of the disclosure.

However, even such loT devices have been traditionally configured to perform pre-defined functions based on voice commands. Additionally, such loT devices lack cognitive intelligence to perform functions on their own and without voice commands or other manual inputs from users. In some scenarios, inadvertent negligence of the users can turn some of these smart devices to produce hazardous outcomes. For example, a smart induction hob may continue to operate during cooking even if the user has left the kitchen area without providing any input for lowering the temperature, thereby resulting in food being charred.

Accordingly, there is a need for cognitive intelligence in the loT devices which may render these devices capable of controlling their one or more parameters without manual inputs or voice commands. Additionally, there is a need to detect situations where the smart devices may produce hazardous outcomes in absence of manual inputs or voice commands from users, and accordingly, initiate a balancing action on the loT devices to control the hazardous outcomes.

US 2018/323996 A1 describes automatic generation of scenes using an assistant device. US 2019/368103 A1 describes a home appliance and method for controlling the same.

### Disclosure

### Technical Solution

According to an aspect of the disclosure, there is provided a method for controlling one or more Internet of Things (IoT) devices in an loT environment as defined by claim 1 of the claims appended hereto.

The method may further include determining, by the computing system, a correlation between the current user activity, the non-speech sound, and a plurality of candidate user actions to respond to the non-speech sound; and predicting, by the computing system, the predicted at least one responsive user action from the plurality of probable user actions based on the correlation.

The correlation may determine an impact of each of the plurality of candidate user actions on the current user activity.

The plurality of candidate user actions may include one or more candidate user actions to respond to the non-speech sound for each user associated with each of the one or more loT device.

The method may further include training, by the computing system, a machine-learning (ML) model to control the one or more loT devices, wherein the training comprises: monitoring, for a period of time, a plurality of user actions in response to one or more non-speech sounds in a vicinity the one or more loT devices, while performing one or more user activities associated with the one or more loT devices; and determining a correlation between the one or more user activities, the one or more non-speech sounds and the plurality of user actions in response to the one or more non-speech sounds to identify the plurality of candidate user actions which the user performs in response to detection of the one or more non-speech sounds while performing the one or more user activities.

The prediction of the at least one responsive user action based on the detected non-speech sound may include: ranking the plurality of candidate user actions using the ML model; and identifying a most probable user action, among the plurality of candidate user actions, as the predicted at least one responsive user action based on the ranking.

The method may further include determining, by the computing system, an actual user action to respond to the non-speech sound for validating an accuracy of the predicted at least one responsive user action, wherein the actual user action is the predicted at least one responsive user action, and wherein the automatic adjustment of the one or more operational settings of the one or more loT devices is performed based on the validation.

The actual user action may be determined based on a current state of the at least one IoT device and another non-speech sound in an acoustic environment around the at least one loT device.

The current user activity may be identified based on at least one of a current state of the at least one loT device, and another non-speech sound in an acoustic environment around the at least one loT device.

The method may further include predicting, by the computing system, a time duration of the predicted at least one responsive user action based on the non-speech sound, wherein the automatic adjustment of the one or more operational settings of the at least one IoT device comprises adjusting the one or more operational settings of the at least one IoT device for the predicted time duration, based on initiation of the predicted at least one responsive user action.

The automatically adjusting the one or more operational settings of the one or more loT devices may include modifying at least one operational parameter of the one or more loT devices, and wherein the at least one operational parameter comprises one of temperature, a timestamp, a volume, speed, or an ON/OFF state of the one or more loT devices.

The computing system may be an IoT device.

According to another aspect of the disclosure, there is provided a system for controlling at least one Internet of Things (IoT) device in an IoT environment as defined by claim 13 of the claims appended hereto.

The processor is further configured to determine a correlation of the current user activity, the non-speech sound, and a plurality of candidate user actions to respond to the non-speech sound, and wherein the processor is further is configured to predict the predicted at least one responsive user action from the plurality of candidate user actions based on the correlation.

To further clarify the advantages and features of the disclosure, a more particular description of the disclosure will be rendered by reference to specific embodiments thereof, which is illustrated in the appended drawings. It is appreciated that these drawings depict only typical embodiments of the disclosure and are therefore not to be considered limiting of its scope. The disclosure will be described and explained with additional specificity and detail with the accompanying drawings.

### Description of Drawings

These and other features, aspects, and advantages of the disclosure will become better understood when the following detailed description is read with reference to the accompanying drawings in which like characters represent like parts throughout the drawings, wherein:
FIG. 1 illustrates a schematic drawing of a smart-home including one or more Internet of Things (IoT) devices, according to an example embodiment of the disclosure;
FIG. 2 illustrates a schematic block diagram of a computing system for controlling an loT device, according to an example embodiment of the disclosure;
FIG. 3 illustrates a schematic block diagram of modules of a computing system for controlling the loT device, according to an example embodiment of the disclosure;
FIG. 4 illustrates an example process flow depicting a method for controlling the loT device, according to an example embodiment of the disclosure;
FIG. 5 illustrates a sequential process flow for controlling the loT device, according to an example embodiment of the disclosure;
FIG. 6 illustrates an example use case of controlling the loT device, according to an example embodiment of the disclosure;
FIG. 7 illustrates another example use case of controlling an loT device, according to an example embodiment of the disclosure;
FIG. 8 illustrates another example use case of controlling an loT device, according to an example embodiment of the disclosure; and
FIG. 9 an exemplary use case for training an artificial intelligence module for controlling an IoT device, according to an example embodiment of the disclosure.

Further, skilled artisans will appreciate that elements in the drawings are illustrated for simplicity and may not have necessarily been drawn to scale. For example, the flow charts illustrate the method in terms of the most prominent operations involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

### Best Mode

For the purpose of promoting an understanding of the principles of the disclosure, reference will now be made to the embodiment illustrated in the drawings and specific language will be used to describe the same. Unless otherwise defined, all technical and scientific terms used herein have the same meaning as commonly understood by one of ordinary skilled in the art to which this disclosure belongs. The system, methods, and examples provided herein are illustrative only and not intended to be limiting. For example, the term "some" as used herein may be understood as "none" or "one" or "more than one" or "all." Therefore, the terms "none," "one," "more than one," "more than one, but not all" or "all" would fall under the definition of "some." It should be appreciated by a person skilled in the art that the terminology and structure employed herein is for describing, teaching, and illuminating some example embodiments and their specific features and elements.

For example, any terms used herein such as, "includes," "comprises," "has," "consists," and similar grammatical variants do not specify an exact limitation or restriction, and certainly do not exclude the possible addition of one or more features or elements, unless otherwise stated. Further, such terms must not be taken to exclude the possible removal of one or more of the listed features and elements, unless otherwise stated, for example, by using the limiting language including, but not limited to, "must comprise" or "needs to include."

Whether or not a certain feature or element was limited to being used only once, it may still be referred to as "one or more features" or "one or more elements" or "at least one feature" or "at least one element." Furthermore, the use of the terms "one or more" or "at least one" feature or element do not preclude there being none of that feature or element, unless otherwise specified by limiting language including, but not limited to, "there needs to be one or more..." or "one or more element is required."

Unless otherwise defined, all terms and especially any technical and/or scientific terms, used herein may be taken to have the same meaning as commonly understood by a person ordinarily skilled in the art.

Reference is made herein to some "embodiments." It should be understood that an example embodiment is an example of a possible implementation of any features and/or elements presented in the attached claims. Some example embodiments have been described for the purpose of explaining one or more of the potential ways in which the specific features and/or elements of the attached claims fulfil the requirements of uniqueness, utility, and non-obviousness.

Use of the phrases and/or terms including, but not limited to, "a first embodiment," "a further embodiment," "an alternate embodiment," "one embodiment," "an example embodiment," "multiple embodiments," "some example embodiments," "other embodiments," "further embodiment", "furthermore embodiment", "additional embodiment" or other variants thereof do not necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or in the context of more than one embodiment, or in the context of all embodiments, the features and/or elements may instead be provided separately or in any appropriate combination or not at all. Conversely, any features and/or elements described in the context of separate embodiments may alternatively be realized as existing together in the context of a single embodiment.

As is traditional in the field, embodiments may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

Any particular and all details set forth herein are used in the context of some embodiments and therefore should not necessarily be taken as limiting factors to the attached claims. The attached claims can be realized in the context of embodiments other than the ones used as illustrative examples in the description below.

Embodiments of the disclosure will be described below in detail with reference to the accompanying drawings.

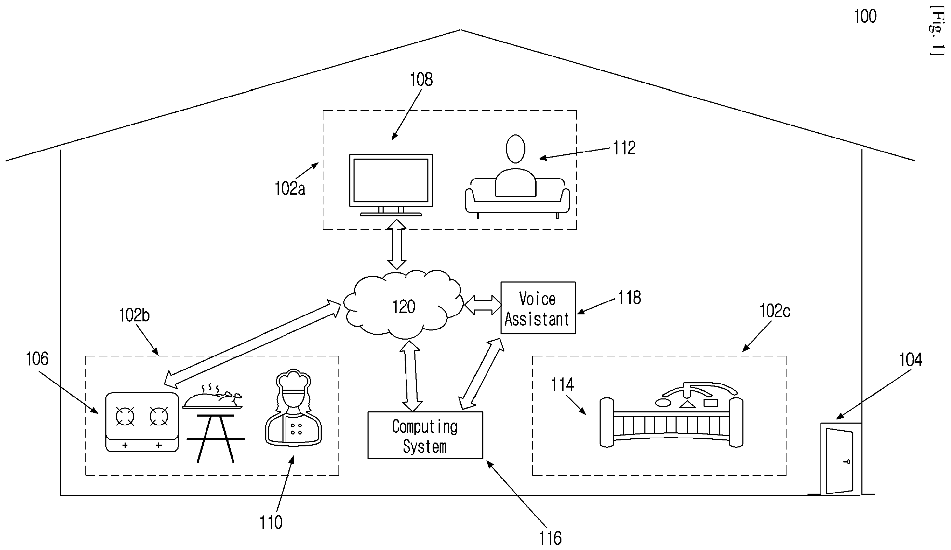

FIG. 1 illustrates a schematic drawing of a smart-home 100 including one or more Internet of Things (loT) devices. In one exemplary embodiment, the smart home 100 may include one or more areas 102a, 102b, and 102c. The area 102a may correspond to a living room area, the area 102b may correspond to a kitchen area, and the area 102c may correspond to a bedroom. The smart home 100 may correspond to an loT environment including one or more loT devices, as discussed herein. Such areas are shown only for illustrative purposes, and a person skilled in the art would understand that the smart home may include other areas as well, without departing from the scope of the present disclosure. Further, in another example embodiment, instead of smart home, an office environment, or a car environment or the like including one or more loT devices may correspond to area 100.

Further, each area 102a-102c may include one or more loT devices. Thus, each area 102a-102c may depict an IoT scene including one or more loT devices. For example, the area 102a may include a smart television 108. Similarly, the area 102b may include a smart induction hob 106. During any point of time, one or more users in the smart home 100 may be engaged in various activities, such as watching television and cooking. For example, a user 112 may be watching the smart television 108 in the area 102a. The user 110 may be cooking using the smart induction hob 106. According to an example, embodiment the kitchen area 102b may include other cooking appliances in addition to the smart induction hob 106. In the area 102c, an infant may be sleeping in the cradle 114. For the sake of brevity, only two loT devices have been shown in FIG. 1, however, there may be more than two loT devices that may be present in the loT environment. As an example, the loT environment may include home environment, office environment and the like. In the current exemplary embodiment, the smart-home 100 may be referred to as an loT environment since the smart-home 100 includes one or more loT devices.

According to an example embodiment, the smart home 100 may include one or more sensors, such as motion sensors or cameras to monitor user activities.

According to an example embodiment, the computing system 116 may be communicatively coupled to a voice assistant 118. The voice assistant device 118 may perform voice recognition, speech synthesis, and Natural Language Processing (NLP) to provide an audio response service or an assistance to the users 110, 112. The voice assistant device 118 may be triggered to initiate the service to the users 110, 112. In operation, the voice assistant device 118 may be configured to detect the non-speech sounds and provide such sounds for predicting user actions to the computing system 116.

In an example embodiment, the voice assistant device 118 may be registered with an account of the users 110, 112. In an example embodiment, the voice assistant device 118 may be embedded in a user device of the users 110, 112. For example, the voice assistant device 118 may be embedded in a smart phone, a smart watch, a tablet, a personal digital assistant (PDA), laptops, of the users 110, 112. In an example embodiment, the voice assistant device 118 may be embedded in an infotainment system of a vehicle. In an example embodiment, the voice assistant device 118 may be embedded in home appliances or equipment (i.e., loT devices) and may be configured to control the home appliances using voice commands of the users 110, 112. The home appliances may include, but are not limited to, a refrigerator, a TV, a washing machine, a music player, an air conditioner, and so on. The voice assistant device 118 may be any device which receives voice inputs from the users 110, 112 and provides service based on the voice inputs received from the users 110, 112. In an example embodiment, the service may be a voice output based on the voice input and/or an action based on the voice input. According to an example embodiment, the service may be a voice output in response to the voice input and/or an action in response to the voice input. The action may include, but is not limited to, controlling devices connected to the voice assistant device 118, providing data to other devices, and/or outputting data or signals by the voice assistant device 118. In an example embodiment, the voice assistant device 118 may connect to other devices or applications to provide service to the users 110, 112. In case that the voice assistant device 118 is disposed in a home environment, the voice assistant device 118 may be connected with home appliances in the home environment and control operations of the home appliances. For example, if the user 112 requests to turn on an air conditioner (AC), the voice assistant device 118 may communicate with the AC to turn on the AC. In an example embodiment, the voice assistant device 118 may be further configured to control temperature settings of the AC.

According to an example embodiment, the smart home 100 may further include a computing system 116 that may be configured to control one or more operational settings of the loT devices 106, 108 based on predicting user activity which may produce hazardous outcomes. In an exemplary embodiment, during cooking by the user 110, the infant's crying sound may be detected from the area 102c, which may prompt the user 110 to leave the area 102b and attend to the crying infant. During the period while the user 110 is away from the area 102b, the food being cooked on the smart hob 106 may get charred. In operation, the computing system 116 may be configured to detect the non-speech sound (e.g., cry of the infant), and predict a next user action (e.g., user 110 walking away to attend the infant) in response to or based on the non-speech sound. Further, the computing system 116 may be configured to monitor the user 110 and detect the actual user action of moving away from the area 102b to attend to the infant in the area 102c. In response, the computing system 116 may automatically adjust an operational setting, e.g., lowering the temperature of the smart induction hob 106 to minimize the impact on cooking, i.e., to avoid the food getting charred. To detect current user activity and predicting the user action, the computing system 116 may be in communication with an IoT cloud to receive IoT devices' states data along with other loT scenes information. Accordingly, even while the smart induction hob 106 did not receive a voice command or any manual input to lower the temperature, the computing system 116 enables automatic lowering of the temperature.

Similarly, in another example, while the user 112 is watching a movie on television, a doorbell sound may be detected from the door 104, which may prompt the user 112 to leave the area 102a and attend to the door 104. During the period while the user 112 is absent from the area 102a, the movie on the television will continue to play. In operation, the system may be configured to detect the non-speech sound, e.g., doorbell, and predict a next user action, e.g., user 112 walking away to attend the door 104 in response to or based on the non-speech sound. Further, the computing system 116 may be configured to monitor the user 112 and detect the actual user action of moving away from the area 102a to attend to the door 104. In response, the system may automatically adjust an operational setting, e.g., creating a bookmark in the movie to assist user in navigating to the timestamp of the movie. Accordingly, even while the smart television 108 did not receive a voice command or any manual input to bookmark the movie, the system enables automatic bookmarking of the movie.

In another example embodiment, the voice assistant device 118 and the computing system 116 may be provided as a single integrated electronic device. Accordingly, the non-speech sound detection may be performed within the integrated computing system 116. Further, the functions of the voice assistant device 118 and the computing system 116 may be performed by the single integrated device.

In some example embodiments, the functionality of computing system 116 may be provided through the loT devices 106, 108 of the smart home 100. For example, the functionality of predicting user activity and controlling operational settings of the loT devices 106, 108 may be provided through the loT device 106, while the functionality of speech classification may be provided through the other loT device 108. In some other embodiments, the computing system 116 may be a standalone electronic device such as, but not limited to, a laptop computer, a desktop computer, a Personal Computer (PC), a notebook, a smartphone, a tablet, e-book readers, a server, a network server, cloud server, and the like. In some other embodiments, the computing system 116 may be an IoT device in the IoT environment or smart home 100. In some other embodiments, the functionality of the computing system 116 may be distributed across one or more loT devices, or electronic devices within the loT environment or smart home 100.

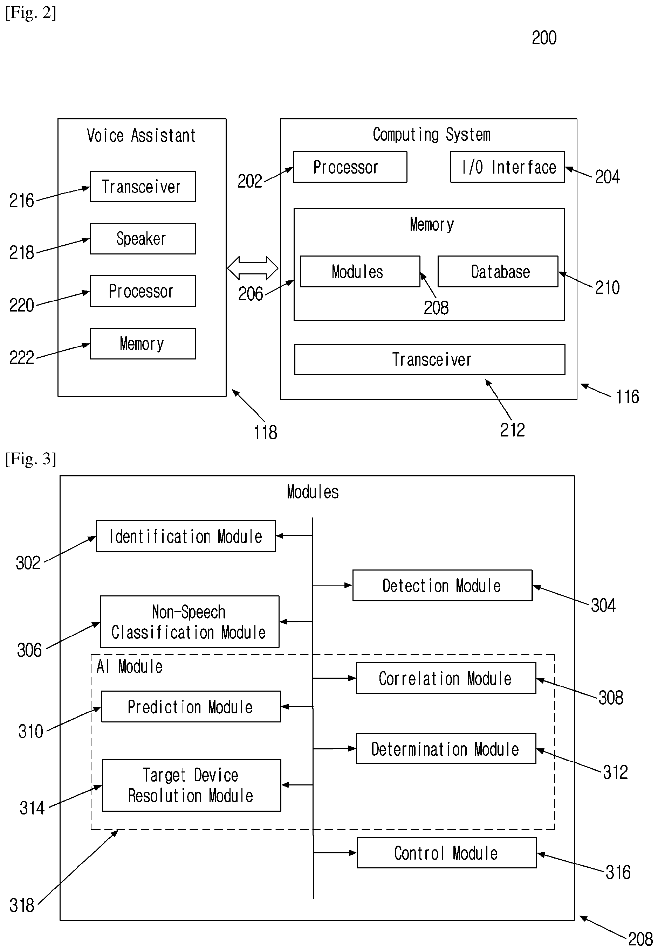

FIG. 2 illustrates a schematic block diagram of a system 200 for controlling an IoT device. In an example embodiment, the voice assistant device 118 may include a transceiver 216, speaker 218, processor 220, and a memory 222. The transceiver 216 may be configured to receive the voice input from the users 110, 112, and non-speech sounds from the surrounding environment of smart-home 100. The speaker 218 may be configured to provide the voice output to the users 110, 112. In an example embodiment, the voice assistant device 118 may be a standalone device or may be embedded in a variety of computing systems 116, such as, but not limited to, a laptop computer, a desktop computer, a Personal Computer (PC), a notebook, a smartphone, a tablet, e-book readers, a server, a network server, cloud server, and the like.

The processor 220 may identify non-speech input including the non-speech sound. In an example embodiment, the non-speech sound may be background environment noise present in the vicinity of the users 110, 112. For example, the non-speech sound may be the sound of an infant, doorbell, microwave alarm beep, rain, background music to which the user may be listening, the sound of people's chat and so on.

Non-speech sound is a sound identified and distinguished from speech signal. In an example embodiment of the disclosure, the non-speech sound may correspond to a non-speech audio (i.e., one of the categories of audio interface) or any audio cues that are associated with specific events. The specific events may be related to events which may trigger one or more user actions which may lead to change in user attention from an loT device currently managed by the user and located in user's vicinity, as discussed throughout the disclosure. Examples of specific events may include, but not limited to, sound of an infant, doorbell, microwave alarm beep, rain, etc. A trained classifier model may be implemented to extract or identify the non-speech sound. The trained classifier model may be configured to perform feature extraction on the audio input to classify the non-speech sound in the audio input. Features extracted for identifying the non-speech sound, may include, but are not limited to, energy function, spectrum, cepstral coefficients, fundamental frequency, loudness, brightness, pitch, timbre, rhythm, and so on. At least one of the aforementioned features may be analyzed to identify the non-speech sound from the audio input. For example, part of audio signal with lower energy, lower loudness and higher frequency may be identified to be the non-speech sound. In an example embodiment, a speech extraction technique may be used on the voice and audio inputs to differentiate the speech signal from non-speech sound. Upon extracting the speech signal, remaining sound from the voice input may be identified as the non-speech signal. In another example embodiment, the non-speech sound may be present independently without presence of any speech sound.

In an example embodiment, the computing system 116 may be configured to control an IoT device by predicting users' reactions to these non-speech sounds. The loT devices may be controlled in a manner that matches the users' reactions. The computing system 116 may include at least one processor 202, Input/Output (I/O) interface 204, and a memory 206. According to an example embodiment, I/O interface may corresponding to an interface configured to facilitate an input operation and an output operation.

For each of the one or more non-speech sounds identified by the voice assistant device 118, the processor 202 of the computing system 116 and/or the processor 220 of the voice assistant may be configured to predict user actions from a plurality of pre-defined probable user actions, to respond to the non-speech sound. Further, the processor 202 of the computing system 116 and/or the processor 220 of the voice assistant may be configured to map the sound events with one or more Natural Language Processing (NLP) domains related to the voice assistant device 118 based on a profile of the user 102. By mapping, the at least one non-speech sound and the corresponding NLP domain capable of handling the at least one non-speech sound may be identified by the processor 202 of the computing system 116 and/or the processor 220 of the voice assistant. In an example embodiment, an event associated with the non-speech sound may indicate a type of the sound or category of the sound. The sound may be categorized based on characteristic of content in the sound. The non-speech sound may be categorized based on one of plurality of categories. Each category from the plurality of categories may provide context of the scenario in which non-speech signal occurred. The plurality of categories may include, but is not limited to, external sound category, human presence category, and domestic sound category and so on. Non-speech sound such as baby crying, kids playing, and people chit-chatting may be categorized to the human presence category. Non-speech sound such as surrounding music, a fire alarm, and appliance sound may be categorized to the internal/domestic sound category. Similarly, traffic sound may be associated with traffic noise event and may be categorized to the external sound category. By identifying the event and categorizing the non-speech sound, an unbounded set of non-speech categorization classifier results may be reduced into a bounded set of actionable non-speech sound events. In an example embodiment, the event may represent context of the non-speech sound. Examples of the pre-defined events associated with the non-speech sounds may include, but are not limited to, a doorbell, a raining event, a traffic noise, a baby crying event, children playing event, a people chat event, music, a television noise, an alarm noise, and so on.

Upon identifying the non-speech sound, the processor 220 may predict one or more subsequent user actions, from the plurality of pre-defined probable user actions, associated with the non-speech sound. In an example embodiment, the predicted user action corresponding to the non-speech sound may be determined based on a correlation of loT devices' states, the non-speech sound, and a plurality of probable user actions to respond to the non-speech sound.

In some example embodiments, the memory 206 may be communicatively coupled to the at least one processor 202. The memory 206 stores data, instructions executable by the at least one processor 202. The memory 206 may include one or more modules 208 and database 210 to store data. The one or more modules 208 may be configured to perform the operations of the present disclosure using the data stored in the database 210, to control one or more loT devices 106, 108. In an example embodiment, each of the one or more modules 208 may be a hardware which may be outside the memory 206. According to an example embodiment, the one or more modules 208 may be a set of computer instructions or a program, which when executed by the at least one processor 202 may perform various operations.

The processor 202 may include at least one data processor for executing processes in Virtual Storage Area Network. The processor 202 may include specialized processing units such as, integrated system (bus) controllers, memory management control units, floating point units, graphics processing units, digital signal processing units, etc.

The processor 202 may be disposed in communication with one or more input/output (I/O) devices via the I/O interface 204. The I/O interface 204 may employ communication code-division multiple access (CDMA), high-speed packet access (HSPA+), global system for mobile communications (GSM), long-term evolution (LTE), WiMax, or the like), etc.

Using the I/O interface 204, the computing system 116 may communicate with one or more I/O devices. For example, the input device may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output devices may be a printer, fax machine, video display (e.g., cathode ray tube (CRT), liquid crystal display (LCD), light-emitting diode (LED), plasma, Plasma Display Panel (PDP), Organic light-emitting diode display (OLED) or the like), audio speaker, etc.

The processor 202 may be configured to communicate with a communication network via a network interface. The network interface may be the I/O interface 204. The network interface may connect to a communication network. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network may include, without limitation, a direct interconnection, local area network (LAN), wide area network (WAN), wireless network (e.g., using Wireless Application Protocol), the Internet, etc. Using the network interface and the communication network, the computing system 116 may communicate with the voice assistant device 118 and loT devices 106, 108. The network interface may employ connection protocols including, but not limited to, direct connect, Ethernet (e.g., twisted pair 10/100/1000 Base T), transmission control protocol/internet protocol (TCP/IP), token ring, IEEE 802.11a/b/g/n/x, etc.

FIG. 3 illustrates a schematic block diagram of modules 208 of the computing system 116 for controlling an IoT device, according to an example embodiment of the present disclosure. The modules 208 may include an identification module 302, a detection module 304, a non-speech classification module 306, a correlation module 308, a prediction module 310, a determination module 312, a target device resolution module 314, and a control module 316. The correlation module 308, the prediction module 310, the determination module 312, and the target device resolution module 314 may together be included within an artificial intelligence (AI) module 318.

In an example embodiment, the identification module 302 may be configured to identify a current user activity. The current user activity is identified in one or more areas of a smart home (loT) environment or loT scenes, such that a user is actively engaged with one or more loT devices in an area. Examples of current user activity may include, but not limited to, cooking using a smart induction hob, watching television on an IoT television, playing game using loT controlled devices, etc. The data related to current user activity may be identified by the identification module 302 using information received from the loT devices or one or more smart sensors. The information received from each of the loT devices may include name, current status or a current state, and category of the loT devices. In an example embodiment, the information related to each of the loT devices may be received via an loT cloud managing the loT devices. In an example embodiment, the current user activity is identified based on at least one of a current state of the at least one IoT device, a user attention information for each of the at least one loT device, and another non-speech sound in an acoustic environment around the at least one IoT device. For example, a user's position in kitchen (i.e., the user is cooking) can be deduced based on the correlation of one or more sensor based inputs like user's position (from smart band, smart watch etc.), IoT device states (state of smart cooktop, etc.), and audio/visual inputs like use of a mixer-grinder (audio) and/or user movement tracker (through an loT camera).

Based on the received information from the loT devices, the identification module 302 may generate an loT activities map which includes the current user activity with each of the loT devices. In an exemplary embodiment, the information may be received in an loT activities map form directly from the loT devices. The loT activities map may include current state and respective user attention score for each of the loT device in the loT scene. The current state may indicate a current operational state of the loT device, for example, ON or OFF. Further, the user attention score may indicate a level of attention required during operation of the loT device, for example, Low, High, or Medium.

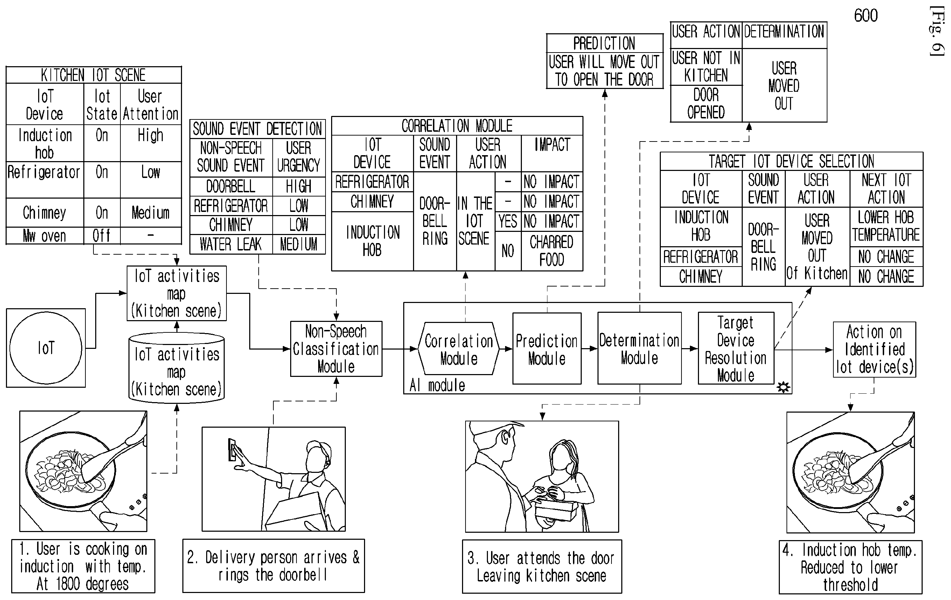

FIGS. 6-8 illustrate IoT activities maps for a kitchen loT scene and a living room loT scene example scenarios. As indicated, an loT activities map for a kitchen loT scene includes multiple loT devices, such as induction hob, refrigerator, chimney, and an oven with a corresponding state (whether ON or OFF) and a user attention score (High, Medium, or Low). In an example embodiment, the user activities map may also include the loT devices' metadata information, which may be utilized by the computing system to perform centralized operations on connected IoT devices.

The detection module 304 is configured to detect one or more overlapping non-speech sounds during the current user activity. In another example embodiment, the non-speech sounds may be detected by the voice assistant device, which may share the non-speech sounds with the detection module 304 of the computing system 116 for further processing.

A plurality of non-speech sounds may be received from the surrounding environment, e.g., within or around a smart home. Examples of non-speech sound may include, but are not limited to, a doorbell, a cry of an infant, a microwave timer, human chatter, pet sounds, loT device sounds, non-loT device sounds (e.g., Car engine sound from garage or lawn mower), etc. The plurality of non-speech sounds may be detected from various different areas of the smart home of FIG. 1. It may be apparent that the detected sounds may also include speech sounds of various users in the loT scenes.

The non-speech classification module 306 is configured to classify the overlapping non-speech sounds into one or more categories and rank the plurality of non-speech sounds based on a user urgency. Exemplary categories for classification of the non-speech sounds may include, but not limited to, human sounds (e.g., chit-chat, coughing, laughter, baby crying, etc.), pet sounds (e.g., dog barking, cat mewing, etc.), domestic sounds (e.g., TV, music, appliances generated sounds, etc.), and external sounds (e.g., wind gushing, traffic noise, etc.) and etc.

The non-speech classification module 306 may include a non-speech filter banks selector to exclude the speech sounds and categorize the non-speech sounds as well as mark them with user attention urgency levels. The user attention urgency may include, but not limited to, High or Low. The user attention urgency may be determined based on pre-stored data and/or a trained Al model stored in the Al module 318. In an example embodiment, the user attention urgency for each non-speech sound may be determined based on historic data related to response time of user upon detection of the respective non-speech sound event in the domestic environment. Based on the nature of the identified non-speech sound, each of the non-speech sounds may be marked with the user attention urgency level, i.e., whether a user needs to give immediate attention to any of the identified sounds or the user can delay or neglect it as a background noise. For example, "baby crying", "fire alarm", and "glass breaking" can be marked as HIGH user attention urgency. On the other hand, "dog barking", "doorbell ring", "microwave alarm beep" etc. can be categorically marked with different user attention urgency levels based on the domestic environment.

In an example embodiment, the non-speech classification module 306 may be a sound intelligence module, trained with non-speech audio data for domestic sound events detection. The non-speech classification module 306 may also receive the loT devices' states information from an loT cloud to accurately classify the loT devices sounds and reduce false positives in classification.

FIGS. 6-8 illustrate exemplary sound events detection for a kitchen loT scene and a living room loT scene. As indicated, the sound events detection for a kitchen loT scene includes multiple non-speech sound events, such as doorbell, refrigerator sound, chimney sound, etc. Such non-speech sound events may be ranked as High or Low based on a user urgency related to such sounds.

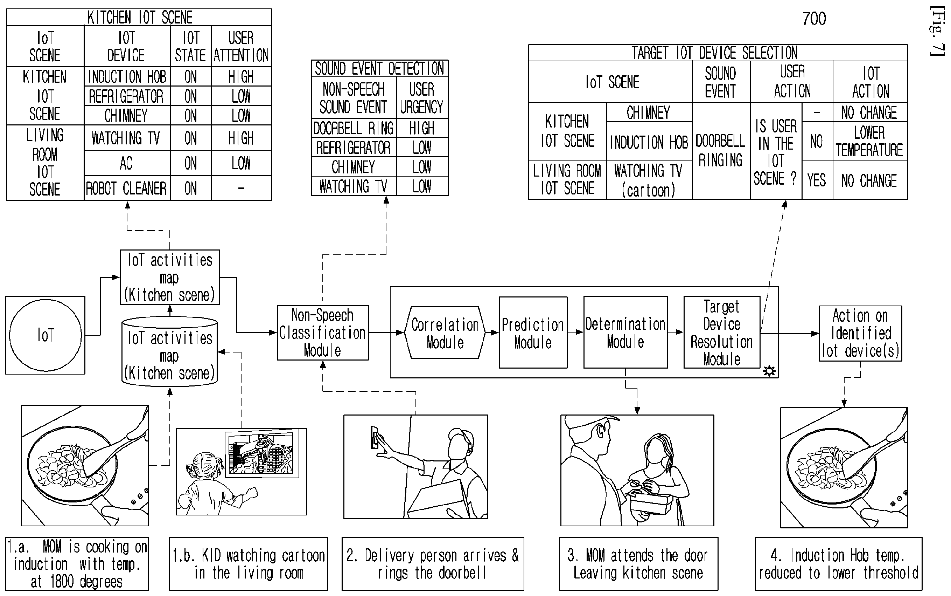

In an example embodiment, one or more highest ranked non-speech sound event may be provided/identified as an output from the non-speech classification module 306. For example, the doorbell and microwave oven alarm beep in FIGS. 6 and 7, respectively, are provided as the output from the non-speech classification module 306 to the correlation module 308.

In an example embodiment, the correlation module 308 may be configured to determine a correlation of the identified non-speech sound event, IoT devices' states, the current user activity, and a plurality of known/probable user actions to respond to the non-speech sound to determine an impact map of each of the plurality of probable user actions on the current user activity. In an example embodiment, the plurality of probable user actions includes one or more probable user actions to respond to the non-speech sound for each user associated with each of the at least one IoT device. Specifically, each user may have a different set of actions to respond to the non-speech sound. The correlation module 308 analyses the identified non-speech sound, a plurality of probable or previously known user responses to the non-speech sound, and the current user activity including the current loT devices' states to determine the impact on the current activity. The impact map contains the impact level on current user activity based on the probable user responses to the non-speech sound event. The impact map may be produced using the trained Al module 318, which is a machine learning or neural network-based model. The correlation helps to remove the false positives by map reduction technique, thus enhancing the accuracy of prediction of user action. The map reduction technique is a well-known deep learning methodology for processing of data, and hence, it is not discussed in detail here. The correlation is used to keep track of data generated across number of events by loT devices and is analyzed to identify recurring patterns of significance.

FIGS. 6-8 illustrate exemplary correlation provided by the correlation module for a kitchen loT scene and a living room loT scene. For example, as indicated in FIG. 6, the correlation is derived for the kitchen loT scene based on the identified (i.e., highest ranked) non-speech sound event of doorbell ring, IoT devices' states (i.e., Induction hob, refrigerator, chimney, and microwave oven) and a plurality of known/probable user actions. Based on the correlation, an impact is determined for each of the current user activities or the loT devices. For the kitchen loT scene, an impact is determined on each of the user activities or the loT devices, due to user's absence from the kitchen when the user attends the door (in view of the doorbell). In the current example, the food may become charred due to the kitchen user attending to the door. For other user activities or loT devices, such as refrigerator, chimney, and microwave oven, the correlation module 308 may determine no impact due to user's probable action/activity (or absence from kitchen area) to the doorbell.

In an example embodiment, the prediction module 310 may predict/select subsequent user action(s), of the plurality of candidate user actions, in response to or based on the identified non-speech sound. According to an example embodiment, the plurality of candidate user actions may be probable users actions which have a higher probability of occurring as compared to user actions that are non-probable. The prediction may be performed using the Al module 318. In an exemplary embodiment, the prediction may be performed based on historic data, stored in the database 210, related to one or more user actions in response to the identified non-speech sound. The predicted user action may impact the current user activity. In an exemplary embodiment, the prediction may be performed based on historic data, stored in the database 210, related to one or more user actions based on the identified non-speech sound. The predicted user action may impact the current user activity.

In an example embodiment, based on the impact map, a list of probable user actions may be derived and the most likely user action(s) for the detected non-speech sound may be predicted. The most likely user action(s) may be predicted using the Al module 318 associated with a machine learning (ML) model for the detected non-speech sound. According to an example embodiment, the most likely most likely user action is the user action that has the highest probability of occurring as compared to other user actions. Further, in an example embodiment, for every predicted next user action, the prediction module 310 may provide a confidence score/rank to denote the likelihood of the user performing the action. The higher the likelihood of the predicted next action, higher will be the confidence score rating. In an example embodiment, the prediction module 310 may include a single Al model or an ensemble of different models to predict possible next user actions with confidence scores. The model relies on non-speech sound event and current loT states to make a reliable prediction.

FIGS. 6-8 provide exemplary prediction of most likely user action(s) for the detected non-speech sound event for a kitchen loT scene and a living room loT scene. As indicated, the most likely user action for a kitchen loT scene includes user moving out of the kitchen scene to open the door, in response to the non-speech sound of doorbell.

In an example embodiment, the determination module 312 may be configured to determine an actual action performed by the user in the loT scene, in response to or based on the identified non-speech sound. The actual action may be determined based on one or more of non-speech sounds in an acoustic environment around the loT devices in the loT scene, the loT device states, and one or more sensors.

Further, the determination module 312 may be configured to validate an accuracy of the determined actual action with the predicted action. Therefore, the determination module 312 may determine whether the action predicted by the prediction module 310 occurred or not, by using combination of non-speech data and/or other sensors. In an example embodiment, the actual user action may be same as the predicted user action.

According to an example embodiment, a feedback pipeline may be provided between the prediction module 310 and the determination module 312 to further aid in the reinforcement learning of the prediction module 310. For example, if the predicted and determined actions for a user in response to or based on a non-speech sound event are same, then positive feedback is provided towards the reinforcement learning of the machine learning based prediction module 310. However, if the determined action is different than the predicted action, then negative feedback is provided to aid the prediction module 310 to re-adjust the training weights for next action prediction. Therefore, the determination module 312 may also eliminate any false positives that may arrive in case of multi-user environment, when the predicted action is not performed by the user.

FIGS. 6-8 provide exemplary determination of the performed user action(s) for the detected non-speech sound event for a kitchen loT scene and a living room loT scene. As indicated, the determination module 312 may determine the actual user action for a kitchen loT scene including the user moving out of the kitchen scene to open the door, in response to the non-speech sound of doorbell. The actual user action of the user moving out of the kitchen may be determined based on loT devices' states or non-speech sounds detected in the smart home or loT scenes. For example, the determination module 312 may detect opening of the door, or user's absence from kitchen area based on sounds from one or more sensors, or user's absence due to unattended kitchen loT devices for a specific period of time.

In an example embodiment, the Target Device Resolution Module 314 may intelligently identify an action to be taken on at least one of the loT devices based on the user action and impact of user response to the non-speech sound event.

In an example embodiment, the target device resolution module 314 may determine an action to be taken on at least one of the loT devices based on the predicted user action to be performed in response to the non-speech sound event. In another example embodiment, the target device resolution module 314 may determine an action to be taken on at least one of the loT devices based on the determined actual user action performed based on the non-speech sound event. In yet another example embodiment, the target device resolution module 314 may determine an action to be taken on at least one of the loT devices based on a combination of the predicted user action to-be-performed and the determined actual user action performed in response to the non-speech sound event.

In an example embodiment, the target device resolution module 314, based on a validation of the determined user action with the predicted user action, may compute one or more preferred values of operational settings of at least one IoT device related to the current activity of the user. Further, the target device resolution module 314 may also be configured to predict a time duration of the predicted user action in response to or based on the non-speech sound, wherein the automatic adjustment of the operational setting of the at least one IoT device includes adjusting the operational setting of the at least one loT device for the predicted time duration, in response to or based on initiation of the predicted user action.

FIGS. 6-8 provide an illustration of the exemplary target loT device resolution. For example, in the kitchen loT scene of FIG. 6, the target device resolution module 314 determines the target device of induction hob and a preferred operational setting (e.g., lowering of temperature) in response to or based on user's action of moving out to attend the door.

In an example embodiment, the control module 316 may be configured to automatically adjust an operational setting of the at least one IoT device to minimize impact on the current user activity, in response to or based on initiation of the predicted user action. The automatic adjustment of the operational setting of the at least one IoT device may include modifying at least one operational parameter of the at least one loT device. In an example embodiment, the at least one operational parameter may include, but not limited to, temperature, a timestamp, a volume, speed, and an ON/OFF state of the loT device.

FIGS. 6-8 provide an illustration of the exemplary control module function. For example, in the kitchen loT scene of FIG. 6, the control module 316 may automatically adjust an operational setting (e.g., temperature) of the induction hob in response to user's action of moving out to attend the door.

In an example embodiment, the Al (Artificial Intelligence) module 318 may include the correlation module 308, the prediction module 310, the determination module 312, and the target device resolution module 314. Specifically, each of the modules 308, 310, 312, and 314 may be Al based module to perform their respective functions as discussed throughout the disclosure. The Al module 318 may include a plurality of neural network layers. Examples of neural networks include, but are not limited to, convolutional neural network (CNN), deep neural network (DNN), recurrent neural network (RNN), Restricted Boltzmann Machine (RBM). The learning technique is a method for training a predetermined target device (for example, a robot) using a plurality of learning data to cause, allow, or control the target device to make a determination or prediction. Examples of learning techniques include, but are not limited to, supervised learning, unsupervised learning, semi-supervised learning, or reinforcement learning. At least one of a plurality of CNN, DNN, RNN, RMB models and the like may be implemented to thereby achieve execution of the present subject matter's mechanism through an Al model. A function associated with Al may be performed through the non-volatile memory, the volatile memory, and the processor. The processor may include one or a plurality of processors. At this time, one or a plurality of processors may be a general-purpose processor, such as a central processing unit (CPU), an application processor (AP), or the like, a graphics-only processing unit such as a graphics processing unit (GPU), a visual processing unit (VPU), and/or an Al-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning.

The Al module 318 or each of the modules 308, 310, 312, and 314 may include a single Al model or an ensemble of different models to perform their respective functions. For example, to predict the next user action based on multiple Al models, there may be one Al model trained on responses for non-speech events related to "human sounds", whereas another Al model may be trained on responses for non-speech events related to "domestic appliances sounds". In such cases, the impact map is deduced from output of ensemble of different models to help in predicting the next user action.

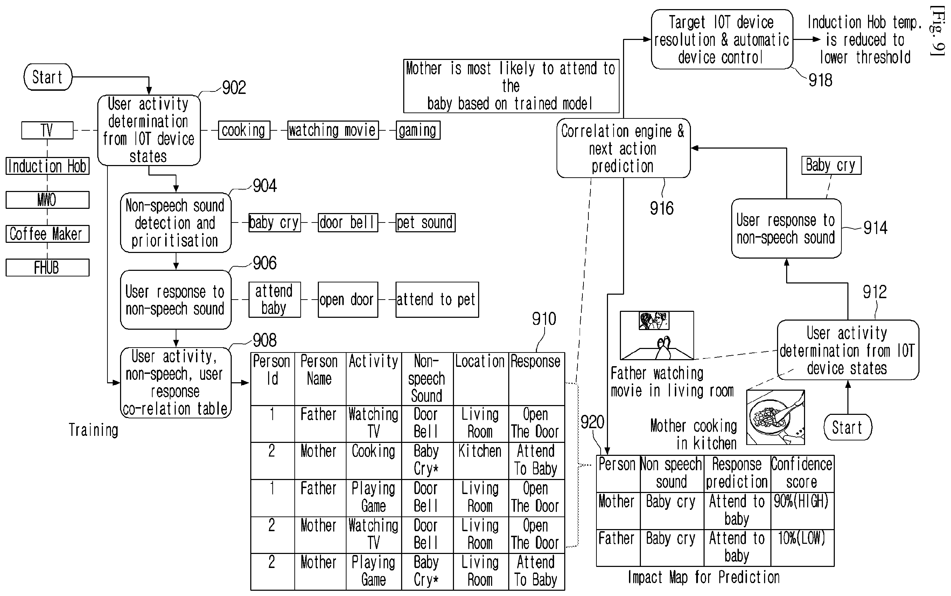

The Al module 318 may be configured to train the machine-learning (ML) or neural network-based model to control the at least one IoT device, according to various embodiments of the disclosure. The training of the ML or neural network-based model includes monitoring a plurality of user actions in response to or based on one or more non-speech sounds around the at least one loT device during a plurality of current user activities. Further, the training includes determining another correlation between the plurality of current user activities, the one or more non-speech sounds and the plurality of user actions in response to or based on the one or more non-speech sounds to identify the plurality of probable user actions which the user performs in response to or based on detection of the one or more non-speech sounds during each of the plurality of current user activities. This will be discussed in conjunction with the description of FIG. 9 later.

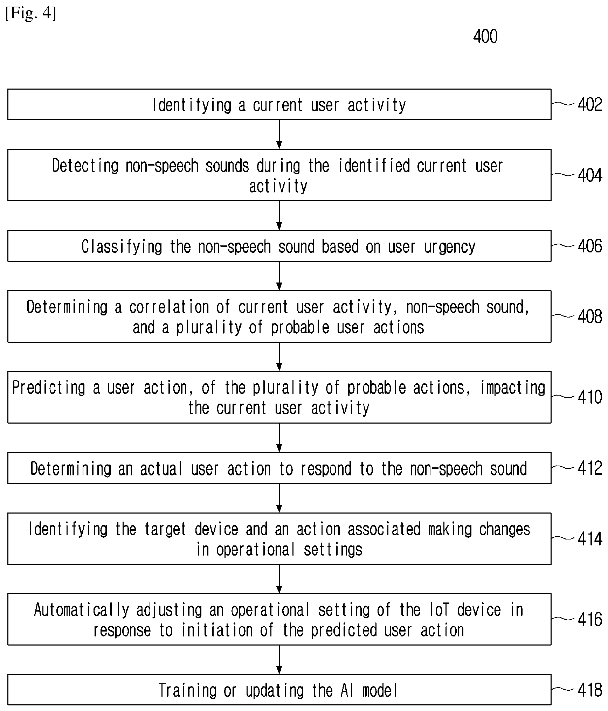

FIG. 4 illustrates an exemplary process flow depicting a method 400 for controlling an IoT device. According to an example embodiment, the method 400 may be performed by a computing system. However, the disclosure is not limited thereto, and as such, according to another example embodiment, another electronic device or an electronic apparatus may be capable of performing the claimed method 400.

At 402, the method 400 includes identifying a current user activity by the computing system. In an example embodiment, a current user activity is identified in one or more areas of a smart home (IoT) environment or loT scenes, such that a user is actively engaged with one or more loT devices in an area. Examples of current user activity may include, but not limited to, cooking using a smart induction hob, watching television on an IoT television, playing game using loT controlled devices, etc. The data related to current user activity may be identified by the computing system using information received from the loT devices. The information received from each of the loT devices may include name, current status, and category of the loT devices. Based on the received information from the loT devices, an loT activities map may be generated by the computing system which includes the current user activity with each of the loT devices. The loT activities map may include current state and respective user attention score for each of the loT device in the loT scene.

At 404, the method 400 includes detecting a non-speech sound during the current user activity. According to an example embodiment, operation 404 may be performed using the computing system in conjunction with the voice assistant device. In an example embodiment, the voice assistant may be configured to receive a plurality of overlapping non-speech sounds from the surrounding environment (e.g., within or around a smart home). Examples of non-speech sound may include, but not limited to, a doorbell, a cry of an infant, a microwave timer, human chatter, pet sounds, IoT device sounds, non-IoT device sounds (e.g., car engine sound from garage or lawn mower), etc. The plurality of non-speech sounds may be detected from various different areas of the smart home of FIG. 1.

At 406, the method 400 includes classifying the non-speech sounds into one or more categories. According to an example embodiment, the plurality of non-speech sounds may be classified and ranked based on a user urgency. The user urgency may include, but not limited to, High or Low. According to another example embodiment, the user urgency may be assigned a numeric value between a first number (e.g. 0) and a second number (e.g. 100). For example, a user urgency with numerical values with a higher number value such as 95 may indicate a high user urgency and a lower number value such as 5 may indicate a low user urgency. However, the disclosure is not limited thereto, and as such, other number ranges may be provided. The user urgency may be determined based on pre-stored data and/or a trained Al model stored in the Al module. In an example embodiment, one or more highest ranked non-speech sound event may be provided/identified as an output from the non-speech classification module.

At 408, the method 400 includes determining a correlation of the identified non-speech sound event, IoT devices' states, and a plurality of known user actions for the non-speech sound, performed by a correlation module of the computing system. Based on the correlation, an impact map is produced. The identified non-speech sound, a plurality of probable or previously known user responses to the non-speech sound, and current devices states are analyzed to determine the impact on the current activity. The impact map contains the impact level on current user activity based on the probable user responses to the non-speech sound event.

At 410, the method 400 includes predicting subsequent user action, of the plurality of probable user actions, by the computing system in response to or based on the identified non-speech sound. The predicted user action may impact the current user activity. According to an example embodiment, the predicted user action that may impact the current user activity may be a user action that affects the user's attention to the current user activity. In an example embodiment, based on the impact map, a list of probable user actions may be derived and the most likely user action(s) for the detected non-speech sound may be predicted. Further, in an example embodiment, for every predicted next user action, a confidence score/rank to denote the likelihood of the user performing the action. The higher the likelihood of the predicted next action, higher will be the confidence score rating.

At 412, the method 400 includes determining an actual action performed by the user in the loT scene, in response to or based on the identified non-speech sound. The actual action may be determined based on one or more of non-speech sounds in the loT scene, the loT device states, and one or more sensors. Further, a validation of the determined actual action with the predicted action may be performed.

At 414, the method 400 includes determining a target loT device and an action associated with making changes in operational settings of the target loT device. In an example embodiment, the target loT device and the action to be taken is determined based on identified user action and impact of user response to the non-speech sound event.

In an example embodiment, the action to be taken on at least one of the loT devices may be determined based on the predicted user action to be performed in response to or based on the non-speech sound event. In another example embodiment, the action to be taken on at least one of the loT devices may be determined based on the determined actual user action performed in response to or based on the non-speech sound event. In yet another example embodiment, the action to be taken on at least one of the loT devices may be determined based on a combination of the predicted user action to-be-performed and the determined actual user action performed in response to or based on the non-speech sound event.

In an example embodiment, based on a validation of the determined user action with the predicted user action, one or more preferred values of operational settings of at least one loT device related to the current activity of the user may be computed. Further, a time duration for applying the determined operational settings may be determined.

At 416, the method 400 includes automatically adjusting a setting of the at least one IoT device to minimize impact on the current user activity, in response to or based on initiation of the predicted user action. For example, a temperature of an induction hob may be lowered. In another example, a movie may be paused, or book marked in response to or based on absence of user due to non-speech sound.

At 418, the method 400 includes training or updating the Al model based on the operations 402-416. In an example embodiment, for a machine-learning or neural network-based Al model, the weights may be adjusted to fix the false positives during the operations 402-416. In an example embodiment, the Al model may be updated after each of the operations 402-416 based on any detection of a false positive during any determination/identification operation using the Al model.

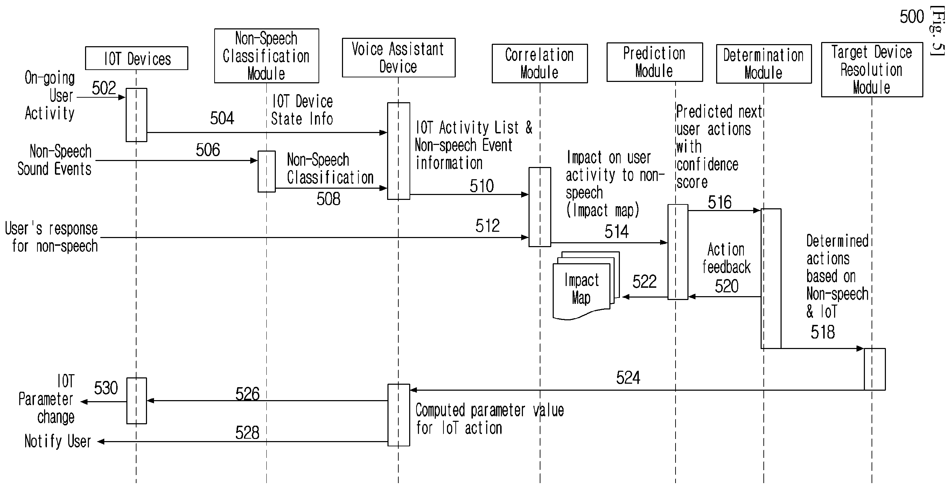

FIG. 5 illustrates a sequential process flow 500 for controlling an IoT device, according to an example embodiment of the present disclosure.

At 502, one or more user activities may be ongoing at the loT devices. The current user activity is identified in one or more areas of a smart home (loT) environment or loT scenes, such that a user is actively engaged with one or more loT devices in an area. Examples of current user activity may include, but not limited to, cooking using a smart induction hob, watching television on an IoT television, playing game using loT controlled devices, etc.

At 504, the loT devices may provide state information to a voice assistant device. In another example embodiment, the state information may be directly accessible to the voice assistant or one or more modules of the computing system via an IoT cloud. The information received from each of the loT devices may include name, current status, and category of the loT devices.

At 506, one or more overlapping non-speech sounds may be provided to a non-speech classification module. In an example embodiment, a plurality of non-speech sounds may be received from the surrounding environment, e.g., within or around a smart home. Examples of non-speech sound may include, but not limited to, a doorbell, a cry of an infant, a microwave timer, human chatter, pet sounds, loT device sounds, non-loT device sounds (e.g., car engine sound from garage or lawn mower), etc.

At 508, the non-speech classification module may be configured to classify the overlapping non-speech sounds into one or more categories and rank the plurality of non-speech sounds based on a user urgency. The user urgency may include, but not limited to, High or Low. In an example embodiment, one or more highest ranked non-speech sound event may be provided/identified as an output from the non-speech classification module.

At 510, the loT activity list along with the highest ranked non-speech sound events may be provided to a correlation module. Additionally, a user's response to the non-speech sound events may be provided to the correlation module at 512.

At 514, the correlation module may be configured to determine a correlation of the identified non-speech sound event, IoT devices' states, and a plurality of known user actions for the non-speech sound to produce an impact map at 522. The correlation module analyses the identified non-speech sound, a plurality of probable or previously known user responses to the non-speech sound, and current devices states to determine the impact on the current activity. The impact map at 522 contains the impact level on current user activity based on the probable user responses to the non-speech sound event.

At 516, the prediction module may predict a user action, of the plurality of probable user actions, in response to or based on the identified non-speech sound. In an example embodiment, based on the impact map, a list of probable user actions may be derived and the most likely user action(s) for the detected non-speech sound may be predicted. Further, in an example embodiment, for every predicted next user action, the prediction module may provide a confidence score/rank to denote the likelihood of the user performing the action. The higher the likelihood of the predicted next action, higher will be the confidence score rating.

At 520, the determination module may be configured to validate the determined actual action with the predicted action. Therefore, the determination module may determine whether the action predicted by the prediction module occurred or not, by using combination of non-speech data and/or other sensors. Further, at 520, feedback may be provided between the prediction module and the determination module to further aid in the reinforcement learning of the prediction module. For example, if the predicted and determined actions for a user in response to or based on a non-speech sound event are same, then positive feedback is provided towards the reinforcement learning of the machine learning based prediction module. However, if the determined action is different than the predicted action, then negative feedback is provided to aid the prediction module to re-adjust the training weights for next action prediction. Therefore, the determination module may also eliminate any false positives that may arrive in case of multi-user environment when the predicted action is not performed by the user.

At 518, the determination module may be configured to determine an actual action performed by the user in the loT scene, in response to or based on the identified non-speech sound. The actual action may be determined based on one or more of non-speech sounds in the loT scene, the loT device states, and one or more sensors.

At 524, the Target Device Resolution Module may identify an action to be taken on at least one of the loT devices based on the user action and impact of user response to the non-speech sound event. In an example embodiment, the target device resolution module, based on a validation of the determined user action with the predicted user action, may compute one or more preferred values of operational settings of at least one IoT device related to the current activity of the user. Further, the target device resolution module may also be configured to determine a time duration for the determined operational settings.

At 526 and 530, the computed preferred value of operational setting of the at least one IoT device may be implemented by the voice assistant. In an alternative embodiment, the computed preferred value of operational setting of the at least one IoT device may be implemented directly via one or more modules of the computing system for the determined time duration.

At 528, the user may be notified of the change in operational setting. In an example embodiment, the user may be notified via a user interface of the loT device, i.e., via a display or sound interface.

FIG. 6 illustrates an exemplary use case 600 of controlling an IoT device while a user is in a kitchen loT scene. As depicted, a user may be cooking using a smart induction hob at 1800 degree Celsius. A kitchen loT scene activity map may be generated for the user including the various devices in the kitchen loT scene, such as induction hob, chimney, refrigerator, microwave oven, etc.

Meanwhile, a delivery person may ring the doorbell. The doorbell sound may be captured as a non-speech sound, via a voice assistant or a computing system, along with various other sounds. As indicated, the sound events detection for a kitchen loT scene includes multiple non-speech sound events, such as doorbell, refrigerator sound, chimney sound, etc. Such non-speech sound events may be ranked as High or Low based on a user urgency related to such sounds. The doorbell sound may be provided as the output from the non-speech classification module to the correlation module.

Next, a correlation is derived by the correlation module for the kitchen loT scene based on the identified (i.e., highest ranked) non-speech sound event of doorbell ring, IoT devices' states (i.e., Induction hob, refrigerator, chimney, and microwave oven) and a plurality of known/probable user actions. Based on the correlation, an impact is determined for each of the current user activities or the loT devices. For the kitchen loT scene, an impact is determined on each of the user activities or the loT devices, due to user's absence from the kitchen when the user attends the door (in view of the doorbell). In the current example, the food may become charred due to the kitchen user attending to the door. For other user activities or loT devices, such as refrigerator, chimney, and microwave oven, the correlation module 308 may determine no impact due to user's probable action/activity (or absence from kitchen area) to the doorbell.

Subsequently, the prediction module may predict the most likely user action(s) for the detected non-speech sound event for a kitchen loT scene. As indicated, the most likely user action for a kitchen loT scene includes user moving out of the kitchen scene to open the door, in response to the non-speech sound of doorbell.

Further, the determination module may determine the performed user action(s) for the detected non-speech sound event for a kitchen loT scene and a living room loT scene. As indicated, the determination module may determine the actual user action for a kitchen loT scene including the user moving out of the kitchen scene to open the door, in response to the non-speech sound of doorbell. The actual user action of the user moving out of the kitchen may be determined based on IoT devices' states or non-speech sounds detected in the smart home or loT scenes. For example, the determination module may detect opening of the door, or user's absence from kitchen area based on sounds from one or more sensors, or user's absence due to unattended kitchen loT devices for a specific period of time.

Furthermore, the target device resolution module determines the target device of induction hob and a preferred operational setting (e.g., lowering of temperature) in response to user's action of moving out to attend the door. Based on the resolution module determining the operational setting and the target loT device, an automatic adjustment of an operational setting (e.g., temperature) of the induction hob may be performed.

FIG. 7 illustrates another exemplary use case 700 of controlling an IoT device, according to an example embodiment of the disclosure. FIG. 7 illustrates a kitchen loT scene similar to the scene of FIG. 6. However, an additional living room loT scene may be detected. Specifically, a user may be watching television in the living room area of the smart home. The computing system of the present disclosure may then consider the living room loT scene along with the kitchen loT scene to determine the activities map, non-speech sound event detection, correlation, prediction of a user action, actual user action determination, and target device resolution.

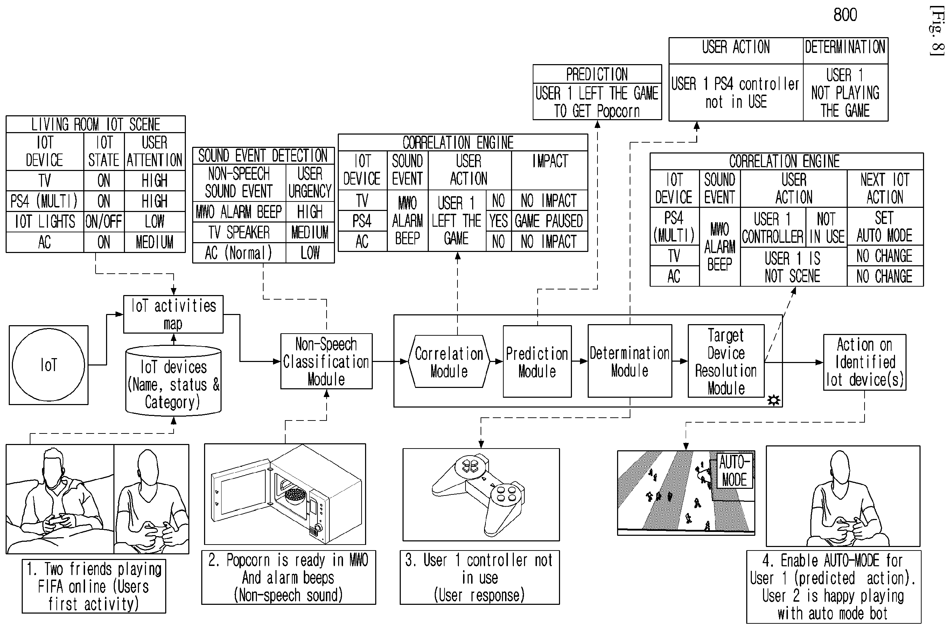

FIG. 8 illustrates another exemplary use case 800 of controlling an IoT device, according to an example embodiment of the disclosure. FIG. 8 illustrates a living room loT scene. Specifically, two players may be playing FIFA online in the living room area of the smart home, while a popcorn is being prepared in the microwave oven in the living area. The computing system of the present disclosure may then consider the living room loT scene to determine the activities map, non-speech sound event detection, correlation, prediction of a user action, actual user action determination, and target device resolution. In the present example, the non-speech sound may be an alarm beep of the microwave oven indicating that the popcorn is ready. One of the users may leave the game to get the popcorn, which may be predicted and validated based on the loT data and one or more sensors. In an example embodiment, the actual determination may be based on idle controller of the first user during the game. As a target device resolution, an auto-mode may be enabled for the user who left the game to get the popcorn.

FIG. 9 illustrates an exemplary use case for training the Al module 318 for controlling an IoT device, according to an example embodiment of the disclosure. In an example embodiment, the Al module 318 may correspond to a machine learning or neural network-based Al model to control the at least one loT device. The training of the ML or neural network-based model includes monitoring a plurality of user actions in response to one or more non-speech sounds around the at least one IoT device during a plurality of current user activities. Further, the training includes identifying the plurality of probable user action which the user performs in response to detection of the one or more non-speech sounds during each of the plurality of current user activities. Accordingly, such probable user actions may be identified based on a correlation of a plurality of current user activities being performed by the user and a plurality of user actions performed by the user in response to one or more non-speech sounds.

Specifically, during the training of Al module 318, a method depicted in operations 902-908 may be followed. At step 902, the method may include identification/determination of current user activity at least based on one or more loT device states. For example, the loT devices detected in the smart home may include a TV, induction hob, a microwave, a coffee maker and an FHUB. The current user activities may include cooking, watching TV, and gaming.

At operation 904, the method may include detecting a non-speech sound and its prioritization. Exemplary non-speech sounds may include a cry of a baby, ringing of doorbell, and/or a sound of a pet. The plurality of non-speech sounds may be detected from various different areas of the smart home of FIG. 1.

At operation 906, the method may include detecting a user response to each of the non-speech sounds detected at operation 904. For example, one user (e.g., the mother) who was cooking attends to the baby in response to the cry of the baby, whereas in another instance, the other user (e.g., the father) who was watching TV opens the door in response to the doorbell. Other instances of various non-speech sound detection and corresponding responses to such sounds may be recorded for different users engaged in different activities. Based on a correlation of users, current user activities, non-speech sounds, their locations with the smart home area, and the corresponding responses may be mapped to generate a correlation table 910 at operation 908. Accordingly, the correlation table 910 may include a plurality of possibilities capturing responses of various users to different non-speech sounds. The correlation table 910 may also indicate different responses of the same user when the location and/or current user activity of the user is different. Additionally, the different responses of the same user may be attributed to change in location and/or current user activity of another user within the same smart home area or environment.

After the training of the Al module, the method moves to operations 912-918 for real time detection of non-speech sound and controlling an IoT device in a predictive manner based on the trained Al model. Specifically, at operation 912, the method includes determining the user activity based on various loT device states. At operation 914, the method includes detecting a non-speech sound such as a cry of a baby. Based on the detected non-speech sound of the cry of baby, a correlation is then determined at operation 916. The determined correlation is associated with the identified non-speech sound event, loT devices' states, and a plurality of known user actions for the non-speech sound event. The plurality of known user actions may be based on the correlation table 910 prepared previously during training of the Al module. Based on the correlation, an impact map 920 is produced. The impact map 920 contains the impact level on current user activity based on the probable user responses to the non-speech sound event. Further, at operation 916, the method includes predicting a most likely user action along with a confidence score which may impact the current user activity, as depicted in impact map 920. As indicated in the impact map, the prediction may indicate that the mother is most likely to attend to the cry of the baby with a confidence score of 90% (HIGH), while the confidence score for the father attending the baby is just 10% (LOW). Further, at operation 918, the method includes determining a target loT device and an action associated with making changes in operational settings of the target loT device. In the instant case, since the mother is currently cooking using an induction hob, the cooking would be impacted due to the mother attending to the baby. Accordingly, the target loT device would be the induction hob, and the operational setting to be controlled would be temperature. In other embodiments, before performing the operation 918, an actual action performed by the user in response to the non-speech sound may also be determined and the operation 918 may further/alternatively be based on actual user action. Thus, the proposed solutions in the present disclosure provide cognitive intelligence in a computing system by correlating the user's current activity with non-speech sound event and predicted/actual user's response to evaluate impact on user's current activity, in order to take a counter balancing action in the loT devices. Further, such balancing actions (e.g., modifying an operational setting) for an loT device avoid any hazardous outcomes due to user's absence or absence of manual input, in view of user's action to the non-speech sounds.

While specific language has been used to describe the present subject matter, any limitations arising on account thereto, are not intended. As would be apparent to a person in the art, various working modifications may be made to the method. The drawings and the foregoing description give examples of embodiments. Those skilled in the art will appreciate that one or more of the described elements may well be combined into a single functional element. Alternatively, certain elements may be split into multiple functional elements. Elements from an example embodiment may be added to another example embodiment.

## Claims

1. A method for controlling one or more Internet of Things, loT, devices in an IoT environment, the method comprising:
identifying (402), by a computing system, a current user activity associated with each of the one or more loT devices;
detecting (404), by the computing system, a non-speech sound during the identified current user activity;
predicting (410), by the computing system, at least one responsive user action based on the detected non-speech sound, wherein the predicted at least one responsive user action impacts the current user activity; the method **characterized by**;
automatically adjusting (416), by the computing system, one or more operational settings of the one or more loT devices to minimize the impact of the predicted at least one responsive user action on the current user activity, based on a confirmation that the user has initiated performance of the predicted at least one responsive user action,
the method further **characterized in that** the detecting comprises:
receiving one or more non-speech sounds around the at least one IoT device;
classifying the one or more non-speech sounds into one or more categories;
ranking (406) the classified one or more non-speech sounds based on a user urgency, wherein the user urgency is determined based on nature of the classified one or more non-speech sounds or pre-stored data related to user response behaviors; and
detecting the non-speech sound, of the one or more non-speech sounds, around the loT device based on the ranking.

2. The method as claimed in claim 1, further comprising:
determining (408), by the computing system, a correlation between the current user activity, the non-speech sound, and a plurality of candidate user actions to respond to the non-speech sound; and
predicting (410), by the computing system, the predicted at least one responsive user action from the plurality of probable user actions based on the correlation.

3. The method as claimed in claim 2, wherein the correlation determines an impact of each of the plurality of candidate user actions on the current user activity.

4. The method as claimed in claim 2, wherein the plurality of candidate user actions comprises one or more candidate user actions to respond to the non-speech sound for each user associated with each of the one or more loT device.

5. The method as claimed in claim 2, further comprising training (418), by the computing system, a machine-learning, ML, model to control the one or more loT devices, wherein the training comprises:
monitoring, for a period of time, a plurality of user actions in response to one or more non-speech sounds in a vicinity the one or more loT devices, while performing one or more user activities associated with the one or more loT devices; and
determining a correlation between the one or more user activities, the one or more non-speech sounds and the plurality of user actions in response to the one or more non-speech sounds to identify the plurality of candidate user actions which the user performs in response to detection of the one or more non-speech sounds while performing the one or more user activities.

6. The method as claimed in claim 5, wherein the prediction (410) of the at least one responsive user action based on the detected non-speech sound comprises:
ranking the plurality of candidate user actions using the ML model; and
identifying a most probable user action, among the plurality of candidate user actions, as the predicted at least one responsive user action based on the ranking.

7. The method as claimed in claim 1, further comprising determining (412), by the computing system, an actual user action to respond to the non-speech sound for validating an accuracy of the predicted at least one responsive user action, wherein the actual user action is the predicted at least one responsive user action, and wherein the automatic adjustment (416) of the one or more operational settings of the one or more loT devices is performed based on the validation.

8. The method as claimed in claim 7, wherein the actual user action is determined based on a current state of the at least one IoT device and another non-speech sound in an acoustic environment around the at least one loT device.

9. The method as claimed in claim 1, wherein the current user activity is identified based on at least one of a current state of the at least one IoT device, and another non-speech sound in an acoustic environment around the at least one IoT device.

10. The method as claimed in claim 1, further comprising predicting, by the computing system, a time duration of the predicted at least one responsive user action based on the non-speech sound, wherein the automatic adjustment (416) of the one or more operational settings of the at least one IoT device comprises adjusting the one or more operational settings of the at least one IoT device for the predicted time duration, based on initiation of the predicted at least one responsive user action.

11. The method as claimed in claim 1, wherein the automatically adjusting (416) the one or more operational settings of the one or more loT devices comprises modifying at least one operational parameter of the one or more loT devices, and wherein the at least one operational parameter comprises one of temperature, a timestamp, a volume, speed, or an ON/OFF state of the one or more loT devices.

12. The method as claimed in claim 1, wherein the computing system is an loT device.

13. A system (200) for controlling at least one Internet of Things, IoT, device in an IoT environment, the system comprising:
a memory (206) storing one or more instructions; and
a processor (202) configured to execute the one or more instructions to:
identify a current user activity associated with each of the one or more loT devices;
detect a non-speech sound during the identified current user activity;
predict at least one responsive user action based on the detected non-speech sound wherein the predicted at least one subsequent user action impacts the current user activity; the system **characterized in that** the processor is further configured to:
automatically adjust one or more operational settings of the one or more loT devices to minimize the impact of the predicted at least one responsive user action on the current user activity, based on a confirmation that the user has initiated performance of the predicted at least one response user action,
the system further **characterized in that** the processor configured to detect the non-speech sound by:
receiving one or more non-speech sounds around the at least one loT device;
classifying the one or more non-speech sounds into one or more categories;
ranking the classified one or more non-speech sounds based on a user urgency, wherein the user urgency is determined based on nature of the classified one or more non-speech sounds or pre-stored data related to user response behaviors; and
detecting the non-speech sound, of the one or more non-speech sounds, around the loT device based on the ranking.

14. The system (200) as claimed in claim 13, wherein the processor (202) is further configured to determine a correlation of the current user activity, the non-speech sound, and a plurality of candidate user actions to respond to the non-speech sound, and
wherein the processor is further is configured to predict the predicted at least one responsive user action from the plurality of candidate user actions based on the correlation.

## Patentansprüche

1. Verfahren zur Steuerung einer oder mehrerer Internet-der-Dinge-, IoT-, Vorrichtungen in einer IoT-Umgebung, wobei das Verfahren Folgendes umfasst:
Identifizieren (402), durch ein Rechensystem, einer aktuellen Benutzeraktivität, die jeder von der einen oder den mehreren IoT-Vorrichtungen zugeordnet ist;
Erkennen (404), durch das Rechensystem, eines Nicht-Sprachgeräuschs während der identifizierten aktuellen Benutzeraktivität;
Vorhersagen (410), durch das Rechensystem, mindestens einer reaktionsfähigen Benutzeraktion basierend auf dem erkannten Nicht-Sprachgeräusch, wobei die vorhergesagte mindestens eine reaktionsfähige Benutzeraktion die aktuelle Benutzeraktivität beeinflusst; wobei das Verfahren **gekennzeichnet ist durch**;
automatisches Anpassen (416), **durch** das Rechensystem, einer oder mehrerer Betriebseinstellungen der einen oder der mehreren IoT-Vorrichtungen, um den Einfluss der vorhergesagten mindestens einen reaktionsfähigen Benutzeraktion auf die aktuelle Benutzeraktivität zu minimieren, basierend auf einer Bestätigung, dass der Benutzer die Durchführung der vorhergesagten mindestens einen reaktionsfähigen Benutzeraktion initiiert hat,
wobei das Verfahren ferner **dadurch** gekennzeichnet ist, dass das Erkennen Folgendes umfasst:
Empfangen eines oder mehrerer Nicht-Sprachgeräusche um die mindestens eine IoT-Vorrichtung herum;
Klassifizieren des einen oder der mehreren Nicht-Sprachgeräusche in eine oder mehrere Kategorien;
Einordnen (406) des klassifizierten einen oder der klassifizierten mehreren Nicht-Sprachgeräusche basierend auf einer Benutzerdringlichkeit, wobei die Benutzerdringlichkeit basierend auf der Art des klassifizierten einen oder der klassifizierten mehreren Nicht-Sprachgeräusche oder vorab gespeicherten Daten im Zusammenhang mit Benutzerreaktionsverhalten bestimmt wird; und
Erkennen des Nicht-Sprachgeräuschs, des einen oder der mehreren Nicht-Sprachgeräusche, um die IoT-Vorrichtung herum basierend auf der Einordnung.

2. Verfahren nach Anspruch 1, ferner umfassend:
Bestimmen (408), durch das Rechensystem, einer Korrelation zwischen der aktuellen Benutzeraktivität, dem Nicht-Sprachgeräusch und einer Vielzahl von Kandidaten-Benutzeraktionen, um auf das Nicht-Sprachgeräusch zu reagieren; und
Vorhersagen (410), durch das Rechensystem, der vorhergesagten mindestens einen reaktionsfähigen Benutzeraktion aus der Vielzahl von wahrscheinlichen Benutzeraktionen basierend auf der Korrelation.

3. Verfahren nach Anspruch 2, wobei die Korrelation einen Einfluss jeder der Vielzahl von Kandidaten-Benutzeraktionen auf die aktuelle Benutzeraktivität bestimmt.

4. Verfahren nach Anspruch 2, wobei die Vielzahl von Kandidaten-Benutzeraktionen eine oder mehrere Kandidaten-Benutzeraktionen umfasst, um auf das Nicht-Sprachgeräusch für jeden Benutzer zu reagieren, der jeder der einen oder mehreren IoT-Vorrichtungen zugeordnet ist.

5. Verfahren nach Anspruch 2, ferner umfassend das Trainieren (418), durch das Rechensystem, eines Machine-Learning-, ML-, Modells, um die eine oder die mehreren IoT-Vorrichtungen zu steuern, wobei das Trainieren Folgendes umfasst:
Überwachen, für einen Zeitraum, einer Vielzahl von Benutzeraktionen als Reaktion auf ein oder mehrere Nicht-Sprachgeräusche in einer Umgebung der einen oder der mehreren IoT-Vorrichtungen, während des Durchführens einer oder mehrerer Benutzeraktivitäten, die der einen oder den mehreren IoT-Vorrichtungen zugeordnet sind; und
Bestimmen einer Korrelation zwischen der einen oder den mehreren Benutzeraktivitäten, dem einen oder den mehreren Nicht-Sprachgeräuschen und der Vielzahl von Benutzeraktionen als Reaktion auf das eine oder die mehreren Nicht-Sprachgeräusche, um die Vielzahl von Kandidaten-Benutzeraktionen zu identifizieren, die der Benutzer als Reaktion auf die Erkennung des einen oder der mehreren Nicht-Sprachgeräusche durchführt, während er die eine oder die mehreren Benutzeraktivitäten durchführt.

6. Verfahren nach Anspruch 5, wobei die Vorhersage (410) der mindestens einen reaktionsfähigen Benutzeraktion basierend auf dem erkannten Nicht-Sprachgeräusch Folgendes umfasst:
Einordnen der Vielzahl von Kandidaten-Benutzeraktionen unter Verwendung des ML-Modells; und
Identifizieren einer wahrscheinlichsten Benutzeraktion unter der Vielzahl von Kandidaten-Benutzeraktionen als die vorhergesagte mindestens eine reaktionsfähige Benutzeraktion basierend auf der Einordnung.

7. Verfahren nach Anspruch 1, ferner umfassend das Bestimmen (412), durch das Rechensystem, einer tatsächlichen Benutzeraktion, um auf das Nicht-Sprachgeräusch zu reagieren, um eine Genauigkeit der vorhergesagten mindestens einen reaktionsfähigen Benutzeraktion zu validieren, wobei die tatsächliche Benutzeraktion die vorhergesagte mindestens eine reaktionsfähige Benutzeraktion ist, und wobei die automatische Anpassung (416) der einen oder der mehreren Betriebseinstellungen der einen oder der mehreren IoT-Vorrichtungen basierend auf der Validierung durchgeführt wird.

8. Verfahren nach Anspruch 7, wobei die tatsächliche Benutzeraktion basierend auf einem aktuellen Zustand der mindestens einen IoT-Vorrichtung und einem anderen Nicht-Sprachgeräusch in einer akustischen Umgebung um die mindestens eine IoT-Vorrichtung herum bestimmt wird.

9. Verfahren nach Anspruch 1, wobei die aktuelle Benutzeraktivität basierend auf mindestens einem von einem aktuellen Zustand der mindestens einen IoT-Vorrichtung und einem anderen Nicht-Sprachgeräusch in einer akustischen Umgebung um die mindestens eine IoT-Vorrichtung herum identifiziert wird.

10. Verfahren nach Anspruch 1, ferner umfassend das Vorhersagen, durch das Rechensystem, einer Zeitdauer der vorhergesagten mindestens einen reaktionsfähigen Benutzeraktion basierend auf dem Nicht-Sprachgeräusch, wobei das automatische Anpassen (416) der einen oder der mehreren Betriebseinstellungen der mindestens einen IoT-Vorrichtung das Anpassen der einen oder der mehreren Betriebseinstellungen der mindestens einen IoT-Vorrichtung für die vorhergesagte Zeitdauer umfasst, basierend auf dem Initiieren der vorhergesagten mindestens einen reaktionsfähigen Benutzeraktion.

11. Verfahren nach Anspruch 1, wobei das automatische Anpassen (416) der einen oder der mehreren Betriebseinstellungen der einen oder der mehreren IoT-Vorrichtungen das Modifizieren mindestens eines Betriebsparameters der einen oder der mehreren IoT-Vorrichtungen umfasst und wobei der mindestens eine Betriebsparameter eines von Temperatur, einem Zeitstempel, einer Lautstärke, einer Geschwindigkeit oder einem EIN-/AUS-Zustand der einen oder der mehreren IoT-Vorrichtungen umfasst.

12. Verfahren, nach Anspruch 1, wobei das Rechensystem eine IoT-Vorrichtung ist.

13. System (200) zum Steuern mindestens einer Internet-der-Dinge-, IoT-, Vorrichtung in einer IoT-Umgebung, wobei das System Folgendes umfasst:
einen Speicher (206), der eine oder mehrere Anweisungen speichert; und
einen Prozessor (202), der dazu konfiguriert ist, die eine oder die mehreren Anweisungen auszuführen zum:
Identifizieren einer aktuellen Benutzeraktivität, die jeder von der einen oder den mehreren IoT-Vorrichtungen zugeordnet ist;
Erkennen eines Nicht-Sprachgeräuschs während der identifizierten aktuellen Benutzeraktivität;
Vorhersagen mindestens einer reaktionsfähigen Benutzeraktion basierend auf dem erkannten Nicht-Sprachgeräusch, wobei die vorhergesagte mindestens eine nachfolgende Benutzeraktion die aktuelle Benutzeraktivität beeinflusst; wobei das System **dadurch gekennzeichnet ist, dass** der Prozessor ferner zu Folgendem konfiguriert ist:
automatisches Anpassen einer oder mehrerer Betriebseinstellungen der einen oder der mehreren IoT-Vorrichtungen, um den Einfluss der vorhergesagten mindestens einen reaktionsfähigen Benutzeraktion auf die aktuelle Benutzeraktivität zu minimieren, basierend auf einer Bestätigung, dass der Benutzer die Durchführung der vorhergesagten mindestens einen Reaktionsbenutzeraktion initiiert hat,
wobei das System ferner **dadurch gekennzeichnet ist, dass** der Prozessor dazu konfiguriert ist, das Nicht-Sprachgeräusch durch Folgendes zu erkennen:
Empfangen eines oder mehrerer Nicht-Sprachgeräusche um die mindestens eine IoT-Vorrichtung herum; Klassifizieren
des einen oder der mehreren Nicht-Sprachgeräusche in eine oder mehrere Kategorien; Einordnen des klassifizierten einen oder der klassifizierten mehreren Nicht-Sprachgeräusche basierend auf einer Benutzerdringlichkeit, wobei die Benutzerdringlichkeit basierend auf der Art des klassifizierten einen oder der klassifizierten mehreren Nicht-Sprachgeräusche oder vorab gespeicherten Daten im Zusammenhang mit Benutzerreaktionsverhalten bestimmt wird; und
Erkennen des Nicht-Sprachgeräuschs, des einen oder der mehreren Nicht-Sprachgeräusche, um die IoT-Vorrichtung herum basierend auf der Einordnung.

14. System (200) nach Anspruch 13, wobei der Prozessor (202) ferner dazu konfiguriert ist, eine Korrelation der aktuellen Benutzeraktivität, des Nicht-Sprachgeräuschs und einer Vielzahl von Kandidaten-Benutzeraktionen zu bestimmen, um auf das Nicht-Sprachgeräusch zu reagieren, und
wobei der Prozessor ferner dazu konfiguriert ist, die vorhergesagte mindestens eine reaktionsfähige Benutzeraktion aus der Vielzahl von Kandidaten-Benutzeraktionen basierend auf der Korrelation vorherzusagen.

## Revendications

1. Procédé permettant la commande d'un ou plusieurs dispositifs de l'Internet des Objets, IoT, dans un environnement IoT, le procédé comprenant :
l'identification (402), par un système informatique, d'une activité d'utilisateur actuelle associée à chacun de l'un ou plusieurs dispositifs IoT ;
la détection (404), par le système informatique, d'un son non vocal pendant l'activité d'utilisateur actuelle identifiée ;
la prédiction (410), par le système informatique, d'au moins une action d'utilisateur réactive sur la base du son non vocal détecté, dans lequel l'au moins une action d'utilisateur réactive prédite a un impact sur l'activité d'utilisateur actuelle ;
le procédé étant **caractérisé par** ;
l'ajustement automatique (416), par le système informatique, d'un ou plusieurs paramètres opérationnels de l'un ou plusieurs dispositifs IoT pour minimiser l'impact de l'au moins une action d'utilisateur réactive prédite sur l'activité d'utilisateur actuelle, sur la base d'une confirmation que l'utilisateur a initié l'exécution de l'au moins une action d'utilisateur réactive prédite,
le procédé étant en outre **caractérisé en ce que** la détection comprend :
la réception d'un ou plusieurs sons non vocaux autour de l'au moins un dispositif IoT ;
la classification de l'un ou plusieurs sons non-vocaux en une ou plusieurs catégories ;
la hiérarchisation (406) de l'un ou plusieurs sons non vocaux classifiés en fonction d'une urgence de l'utilisateur, dans lequel l'urgence de l'utilisateur est déterminée sur la base de la nature de l'un ou plusieurs sons non vocaux classifiés ou de données préenregistrées liées aux comportements de réponse de l'utilisateur ; et
la détection du son non vocal, de l'un ou plusieurs sons non vocaux, autour du dispositif IoT sur la base de la hiérarchisation.

2. Procédé selon la revendication 1, comprenant en outre :
la détermination (408), par le système informatique, d'une corrélation entre l'activité d'utilisateur actuelle, le son non vocal, et une pluralité d'actions d'utilisateur candidates pour répondre au son non vocal ; et
la prédiction (410), par le système informatique, de l'au moins une action d'utilisateur réactive prédite à partir de la pluralité d'actions d'utilisateur probables sur la base de la corrélation.

3. Procédé selon la revendication 2, dans lequel la corrélation détermine un impact de chacune de la pluralité d'actions d'utilisateur candidates sur l'activité d'utilisateur actuelle.

4. Procédé selon la revendication 2, dans lequel la pluralité d'actions d'utilisateur candidates comprend une ou plusieurs actions d'utilisateur candidates pour répondre au son non vocal pour chaque utilisateur associé à chacun de l'un ou plusieurs dispositifs IoT.

5. Procédé selon la revendication 2, comprenant en outre l'entraînement (418), par le système informatique, d'un modèle d'apprentissage automatique, ML, pour commander l'un ou plusieurs dispositifs IoT, dans lequel l'entraînement comprend :
la surveillance, pendant une période de temps, d'une pluralité d'actions d'utilisateur en réponse à un ou plusieurs sons non vocaux dans le voisinage de l'un ou plusieurs dispositifs IoT, tout en effectuant une ou plusieurs activités d'utilisateur associées à l'un ou plusieurs dispositifs IoT ; et
la détermination d'une corrélation entre l'une ou plusieurs activités d'utilisateur, l'un ou plusieurs sons non vocaux et la pluralité d'actions d'utilisateur en réponse à l'un ou plusieurs sons non vocaux pour identifier la pluralité d'actions d'utilisateur candidates que l'utilisateur effectue en réponse à la détection de l'un ou plusieurs sons non vocaux tout en effectuant l'une ou plusieurs activités d'utilisateur.

6. Procédé selon la revendication 5, dans lequel la prédiction (410) de l'au moins une action d'utilisateur réactive sur la base du son non vocal détecté comprend :
la hiérarchisation de la pluralité d'actions d'utilisateur candidates à l'aide du modèle ML ; et
l'identification d'une action d'utilisateur la plus probable, parmi la pluralité d'actions d'utilisateur candidates, comme l'au moins une action d'utilisateur réactive prédite sur la base de la hiérarchisation.

7. Procédé selon la revendication 1, comprenant en outre la détermination (412), par le système informatique, d'une action d'utilisateur effective pour répondre au son non vocal pour valider une précision de l'au moins une action d'utilisateur réactive prédite, dans lequel l'action d'utilisateur effective est l'au moins une action d'utilisateur réactive prédite, et dans lequel l'ajustement automatique (416) de l'un ou plusieurs paramètres opérationnels de l'un ou plusieurs dispositifs IoT est effectué sur la base de la validation.

8. Procédé selon la revendication 7, dans lequel l'action d'utilisateur effective est déterminée sur la base d'un état actuel de l'au moins un dispositif IoT et d'un autre son non vocal dans un environnement acoustique autour de l'au moins un dispositif IoT.

9. Procédé selon la revendication 1, dans lequel l'activité d'utilisateur actuelle est identifiée sur la base d'au moins un parmi un état actuel de l'au moins un dispositif IoT, et un autre son non vocal dans un environnement acoustique autour de l'au moins un dispositif IoT.

10. Procédé selon la revendication 1, comprenant en outre la prédiction, par le système informatique, d'une durée de temps de l'au moins une action d'utilisateur réactive prédite sur la base du son non vocal, dans lequel l'ajustement automatique (416) de l'un ou plusieurs paramètres opérationnels de l'au moins un dispositif IoT comprend l'ajustement de l'un ou plusieurs paramètres opérationnels de l'au moins un dispositif IoT pour la durée de temps prédite, sur la base de l'initiation de l'au moins une action d'utilisateur réactive prédite.

11. Procédé selon la revendication 1, dans lequel l'ajustement automatique (416) de l'un ou plusieurs paramètres opérationnels de l'un ou plusieurs dispositifs IoT comprend la modification d'au moins un paramètre opérationnel de l'un ou plusieurs dispositifs IoT, et dans lequel l'au moins un paramètre opérationnel comprend l'un parmi la température, un horodatage, un volume, une vitesse, ou un état MARCHE/ARRÊT de l'un ou plusieurs dispositifs IoT.

12. Procédé selon la revendication 1, dans lequel le système informatique est un dispositif IoT.

13. Système (200) permettant la commande d'au moins un dispositif de l'Internet des Objets, IoT, dans un environnement IoT, le système comprenant :
une mémoire (206) stockant une ou plusieurs instructions ; et
un processeur (202) configuré pour exécuter l'une ou plusieurs instructions afin de :
identifier une activité d'utilisateur actuelle associée à chacun de l'un ou plusieurs dispositifs IoT ;
détecter un son non vocal pendant l'activité d'utilisateur actuelle identifiée ;
prédire au moins une action d'utilisateur réactive sur la base du son non vocal détecté dans lequel l'au moins une action d'utilisateur postérieure prédite a un impact sur l'activité d'utilisateur actuelle ;
le système étant **caractérisé en ce que** le processeur est en outre configuré pour :
ajuster automatiquement un ou plusieurs paramètres opérationnels de l'un ou plusieurs dispositifs IoT pour minimiser l'impact de l'au moins une action d'utilisateur réactive prédite sur l'activité d'utilisateur actuelle, sur la base d'une confirmation que l'utilisateur a initié l'exécution de l'au moins une action d'utilisateur réactive prédite,
le système étant en outre **caractérisé en ce que** le processeur est configuré pour détecter le son non vocal par :
la réception d'un ou plusieurs sons non vocaux autour de l'au moins un dispositif IoT ;
la classification de l'un ou plusieurs sons non vocaux en une ou plusieurs catégories ;
la hiérarchisation de l'un ou plusieurs sons non vocaux classifiés sur la base d'une urgence de l'utilisateur, dans lequel l'urgence de l'utilisateur est déterminée sur la base de la nature de l'un ou plusieurs sons non vocaux classifiés ou de données préenregistrées liées aux comportements de réponse de l'utilisateur ; et
la détection du son non vocal, de l'un ou plusieurs sons non vocaux, autour du dispositif IoT sur la base de la hiérarchisation.

14. Système (200) selon la revendication 13, dans lequel le processeur (202) est en outre configuré pour déterminer une corrélation de l'activité d'utilisateur actuelle, du son non vocal, et d'une pluralité d'actions d'utilisateur candidates pour répondre au son non vocal, et
dans lequel le processeur est en outre configuré pour prédire l'au moins une action d'utilisateur réactive prédite à partir de la pluralité d'actions d'utilisateur candidates sur la base de la corrélation.
